# EUROPÄISCHE PATENTANMELDUNG

(11) **EP 0 843 053 A1**
(43) Veröffentlichungstag der Anmeldung: **20.05.1998**
(21) Anmeldenummer: 97119420.4
(22) Anmeldetag: 06.11.1997
(51) Int. Cl.: E04B 1/24, F16B 5/00, E04C 3/04, E04B 5/02

(54) **Kraftschlüssige Verbindungskonstruktion zwischen Stützen-und Trägerelementen bzw. Trägerelementen untereinander**

(30) Priorität: 15.11.1996 DE 19647187
(71) Anmelder: DYCKERHOFF & WIDMANN AG, 81902 München (DE)
(72) Erfinder:
(74) Vertreter: Patentanwälte Möll und Bitterich

(57) **Zusammenfassung**

Die Erfindung betrifft eine kraftschlüssige Verbindungskonstruktion zwischen Stützen- (2) und Trägerelementen (3) bzw. Trägerelementen (3) untereinander. Dabei ist eine Lagerplatte (13) fest mit einem Stützen- (2) bzw. Trägerelement (3) und eine Kopfplatte (12) fest mit einem Trägerelement (3) verbunden. An der Vorderseite der Lagerplatte (13) ist mindestens ein Sicherungsstift (14) aufrecht angeordnet, dessen oberes Ende über die obere Kante der Lagerplatte (13) kragt. Das Trägerelement (3) ist mit der unteren Randseite der Kopfplatte (12) auf der oberen Randseite (15) der Lagerplatte (13) auflegbar. Vorteil der Erfindung ist, daß mit wenigen typisierten Verbindungselementen ausgekommen werden kann. Zudem ermöglicht die Erfindung eine zeitliche Auflösung der einzelnen Montageschritte, bedingt durch die von Anfang an vorhandene Eigenstabilität der Konstruktion. Das führt zu erheblichen Verkürzungen der Montagezeiten.

## Beschreibung

Die Erfindung betrifft eine kraftschlüssige Verbindungskonstruktion zwischen Stützen- und Trägerelementen bzw. Trägerelementen untereinander gemäß dem Oberbegriff des Patentanspruchs 1.

Im Bemühen um industrialisierte wirtschaftliche Bauverfahren bzw. -konstruktionen zur raschen und preisgünstigen Errichtung von Hochbauten, insbesondere Wohnbauten, sind eine Vielzahl von Modulsystemen bekannt. Diesen Systemen liegt das Konzept zugrunde, durch eine bestimmte Anzahl von Grundelementen eine systematisierte Tragwerksstruktur mit größtmöglicher Flexibilität für Wohnraumentwicklung zu ermöglichen. Dies wird erreicht über die Entwicklung von Raumzellen zu Raumzellenmodulen und deren - logistisch bedingte - Auflösung zu baukastenartigen Stabwerkelementen.

Wesentlich für die Wirtschaftlichkeit einer derartigen Tragwerksstruktur ist die Ausbildung der Knotenpunkte zwischen vertikalen Stützenelementen und horizontalen Tragelementen, die in sechs Richtungen jeweils unter 90° zu einem Traggerüst zusammengefügt werden müssen und deshalb einen Großteil der Montagezeit für sich in Anspruch nehmen. Während zwischen vertikalen Stützenelementen, die gewöhnlich aus Hohlprofilen bestehen, durch zapfengeführtes Zusammenstecken der Hohlprofile und gegebenenfalls Verschrauben auf einfache und sichere Art eine kraftschlüssige Verbindung hergestellt wird, sind beim Anschluß von horizontalen Trägerelementen an vertikale Stützenelemente bzw. andere Trägerelemente verschiedene Verbindungskonstruktionen bekannt.

Die Offenlegungsschrift 26 34 179 offenbart eine Vorrichtung zur Verbindung zweier Konstruktionselemente, bei der sowohl an den Säulen als auch den Trägern ebene Platten angebracht sind. Diese Platten weisen Schlitze und Bolzen auf, die derart angeordnet sind, daß die Bolzen zweier gegenüberliegender Platten in die Schlitze der jeweils anderen Platte eingeführt werden können, wobei gleichzeitig eine Verriegelung über den verbreiterten Bolzenkopf erfolgt.

Diese Konstruktionsweise hat den Nachteil, daß sämtliche Kräfte, die auf die Verbindung wirken, allein über die Bolzen abzutragen sind. Infolge der verhältnismäßig kleinen Bolzenquerschnitte führt das zu einer schnellen Überbeanspruchung der Verbindungskonstruktion. Ein weiterer Nachteil zeigt sich bei der Montage der Elemente. Während des Einfädelns der Bolzen in die Schlitze muß der Träger in exakt rechtwinkliger Position zur Säule gebracht und gehalten werden. Dies ist unter Baustellenbedingungen ein sehr schwieriges und zeitaufwendiges Vorhaben.

Darüber hinaus ist es aus der DE 43 13 895 A1 bekannt, an Stützen und Trägern Platten anzubringen, die nach Art von Schwalbenschwanztasche und Schwalbenschwanzplatte ausgebildet sind. Beim Aneinanderfügen von Träger und Stütze wird die Schwalbenschwanzplatte in die Schwalbenschwanztasche eingeführt. Die kraftschlüssige Verbindung erfolgt über hinterschnittene Seitenflächen der Schwalbenschwanztasche bzw. -platte.

Auch hier erweist sich als nachteilig, daß der Träger in exakte Einfädelposition gebracht und gehalten werden muß. Der Kraftschluß wird allein über die hinterschnittenen Flächen hergestellt. Infolge ungünstiger Hebelverhältnisse ist eine derartige Verbindungskonstruktion nur mäßig beanspruchbar.

Vor diesem Hintergrund liegt der Erfindung die Aufgabe zugrunde, eine Konstruktionsverbindung anzugeben, die zu minimalen Montagezeiten führt, dabei aber keine Einschränkungen hinsichlich des Tragverhaltens der Gesamtkonstruktion in Kauf genommen werden müssen.

Gemäß der Erfindung wird diese Aufgabe durch eine Verbindungskonstruktion mit den Merkmalen des Patentanspruchs 1 gelöst.

Vorteilhafte Weiterbildungen ergeben sich aus den Unteransprüchen.

Der Erfindung liegt der Gedanke zugrunde, die Verbindungskonstruktion auf ein Minimum von Teilen zu beschränken, die darüber hinaus bei allen Anschlüssen gleich ausgebildet sind. Dadurch kann eine Baukonstruktion mit nur wenigen typisierten Einzelelementen realisiert werden. Die unterschiedlichen statischen Beanspruchungen werden in den Wandstärken der Einzelelemente berücksichtigt. Das hat den Vorteil, daß nur wenige unterschiedliche Einzelelemente, aber diese in großer Stückzahl benötigt werden. Dadurch lassen sich diese Einzelelemente sehr wirtschaftlich produzieren. Auch entfällt die Lagerhaltung und der damit einhergehende Verwaltungsaufwand für eine Vielzahl unterschiedlicher Teile wie bei konventionellen Konstruktionen.

Die Bauwerkskonstruktion wird vollständig in Stützen- und Trägerelemente aufgelöst transportiert und komplett vor Ort montiert. Dabei erlaubt die erfindungsgemäße Verbindungskonstruktion infolge ihrer Einfachheit äußerst kurze Montagezeiten. Diese werden dadurch erreicht, daß die Einzelelemente werkseitig vorbereitet werden, z.B. indem Lagerplatten an die entsprechenden Stellen der Stützenelemente geschraubt oder geschweißt werden.

Ein weiterer Grundgedanke der Erfindung ist es, komplexe Arbeitsvorgänge bei der Montage zu entzerren und nacheinander auszuführen. Dies führt zu weiteren Verkürzungen der Montagezeiten. So ermöglicht die erfindungsgemäße Verbindungskonstruktion in einem ersten Arbeitsgang das Zusammenstecken der Einzelelemente, z.B. über ein gesamtes Stockwerk, und in einem erst dann nachfolgenden zweiten Arbeitsgang das vollständige Ausbilden der Verbindungskonstruktion durch Verschrauben der Elemente. Die erfindungsgemäße Verbindungskonstruktion ist dabei in der Lage, angreifende Kräfte während eines Bauzustandes auch ohne Verschraubung zu tragen.

Voraussetzung dafür ist, daß die Verbindungskonstruktion selbstsichernd ausgebildet ist, sich die Verbindung also nicht selbständig lösen kann. Dies wird erfindungsgemäß durch Anschläge erreicht, die Bewegungen der Einzelelemente in horizontaler Richtung unterbinden.

Für eine weitere wesentliche Erleichterung während des Montagevorgangs sorgt die Selbstzentrierung der Konstruktion während des Zusammensetzens. Durch geeignete Führungsflächen wird sichergestellt, daß die einzelnen Elemente während der Montage selbständig in die vorbestimmte Sollposition gelangen. Das gewährleistet eine sichere Lastabtragung in den Untergrund. Gleichzeitig wird dabei auch dafür Sorge getragen, daß die Bolzenlöcher der einzelnen Bauelemente fluchtend angeordnet sind und so Probleme beim nachfolgenden Verschrauben weitgehend ausgeschlossen sind.

Ein weiterer wesentlicher Vorteil ist es, daß die konstruktive Ausbildung der Verbindung zwar zu Verkürzungen der Montagezeiten führt, das Tragverhalten dabei aber nicht beeinträchtigt. Die Verbindungskonstruktion ist demgemäß in der Lage, auch schwere Lasten abzutragen. Das ermöglicht einerseits die Verwendung massiver Ausfachungselemente an Wänden und Decken, z.B. in Stahlbetonbauweise. Solche Elemente haben den Vorteil, daß sie hohen Anforderungen an Brandschutz, Schalldämmung oder Wärmespeichervermögen gerecht werden. Andererseits wird dadurch ermöglicht, große Spannweiten zu überbrücken. Dadurch erhält man bei der Raumeinteilung größtmögliche Flexibilität. Es ist sogar möglich, eine bestehende Raumeinteilung nachträglich zu verändern.

Für Freiheit in der Gestaltung der Grundrisse sorgt unter anderem auch die große Kombinationsfreiheit der Einzelelemente untereinander. So kann die Lagerplatte auch an die Längsseiten der Trägerelemente angeordnet werden. Dadurch sind Anschlüsse von Trägerelementen an Trägerelemente möglich; Stützenelemente können dabei eingespart werden.

Die Möglichkeit, eine Lagerplatte an beinahe jeder Stelle der Stützen- bzw. Trägerelemente anzubringen, erlaubt es, eine bestehende Stahlskelettkonstruktion nachträglich zu ergänzen bzw. anzupassen. So können weitere Raumzellen an die Konstruktion angefügt werden oder es lassen sich weitere Trägerelemente in eine bestehende Deckenkonstruktion einfügen, z.B. im Falle geänderter statischer Anforderungen.

Nach einer bevorzugten Ausführungsform der Erfindung sind sämtliche Elemente der Erfindungskonstruktion, wie z.B. Sicherungsstift, Führungselement und Schrauben innerhalb der Querschnitte der Stützen- und Trägerelemente verdeckt angeordnet. Von außen sind sie nicht sichtbar, weshalb die Verbindungskonstruktion einen ästhetisch gelungenen Gesamteindruck hinterläßt. Zur Montage der Tragelemente sind in diesem Fall an der Unter- und/oder Oberseite der Trägerelemente Ausnehmungen angeordnet.

Die erfindungsgemäße Verbindungskonstruktion ist nicht auf Tragglieder aus Stahl beschränkt. Genauso ist es möglich, eine Lager- oder Kopfplatte als Einbauteil auszubilden und zum Beispiel in Stahlbetonstützen bzw. -träger zu integrieren. Auch ein Anbringen der Lager- oder Kopfplatte an Holztragglieder mit Hilfe von Laschen und Schraubbolzen ist möglich.

Die Erfindung wird nachstehend anhand eines in der Zeichnung dargestellten Ausführungsbeispiels erläutert. Es zeigen
- Fig. 1: eine isometrische Darstellung einer dreigeschossigen Skelettkonstruktion,
- Fig. 2: eine explosionsartig auseinandergezogene Darstellung einer Skelettkonstruktion,
- Fig. 3: eine explosionsartig auseinandergezogene Darstellung eines Knotenpunkts,
- Fig. 4a: eine Ansicht einer Lagerplatte,
- Fig. 4b: einen Querschnitt einer in Fig. 4a dargestellten Lagerplatte entlang der Linie IV-IV,
- Fig. 5a: einen Vertikalschnitt durch einen Knotenpunkt,
- Fig. 5b: einen Querschnitt durch das in Fig. 5a dargestellte Trägerelement entlang der Linie V-V,
- Fig. 5c: einen Horizontalschnitt durch den in Fig. 5a dargestellten Knotenpunkt entlang der Linie X-X,
- Fig. 6a: eine Ansicht eines Stützenelements aus Stahlbeton mit einer Lagerplatte als Einbauteil,
- Fig. 6b: einen Längsschnitt durch das in Fig. 6a dargestellte Stützenelement entlang der Linie VI-VI,
- Fig. 7: einen Querschnitt durch ein Trägerelement mit Deckenelementen und
- Fig. 8: eine Schrägansicht eines Trägerelements mit Auflagerwinkel und Justiervorrichtung.

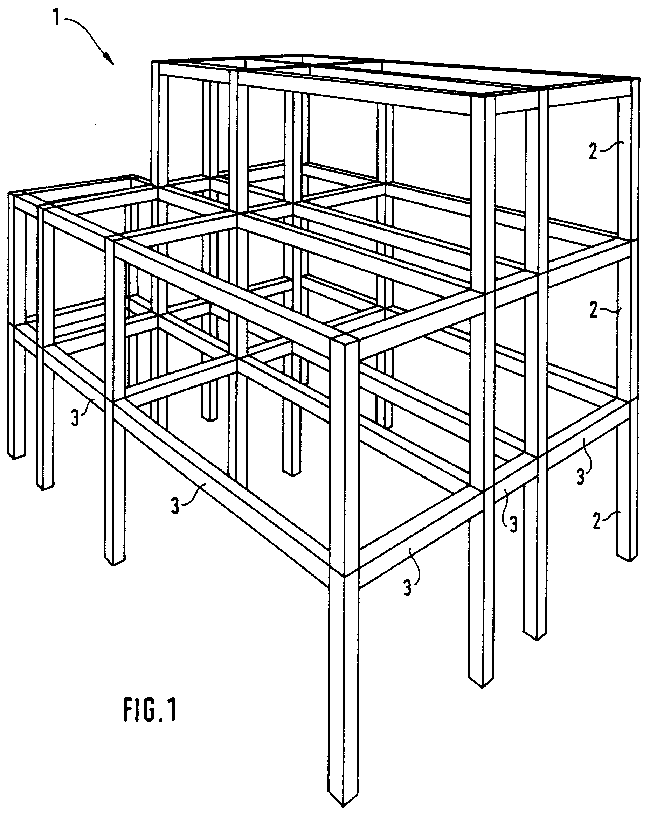

In Fig. 1 sieht man eine dreigeschossige Skelettkonstruktion 1, wie sie zum Beispiel nach der Erfindung hergestellt werden kann. Sie besteht im wesentlichen aus Stützenelementen 2 und Trägerelementen 3, die jeweils eine offene Raumzelle bilden. Durch eine Kombination vieler Raumzellen entstehen Strukturkonzepte für Reihenhäuser, Geschoßbauten, Schulbauten etc. Dabei lassen sich nach der Erfindung auch mehrgeschossige Gebäude herstellen, wobei die Skelettkonstruktion für sich allein stabil ist.

Geschlossen werden die Raumzellen durch Ausfachungselemente, die zugleich die Skelettkonstruktion 1 aussteifen. Als Decken- und Dachelemente kommen Leichtbeton-, Stahlbetonfertigteile sowie Trapezbleche mit Aufbeton und Holzrippenplattenelemente in Frage. Für Wandelemente eignen sich neben Leichtbeton- und Stahlbetonfertigteilen Holzrahmenelemente aus Rahmenelemente mit kaltgewalzten Blechprofilen. Diese Ausfachungselemente können mit einem Luftkanalsystem ausgestattet sein, das zur Wärmeleitung und somit Beheizung der Raumzellen dient.

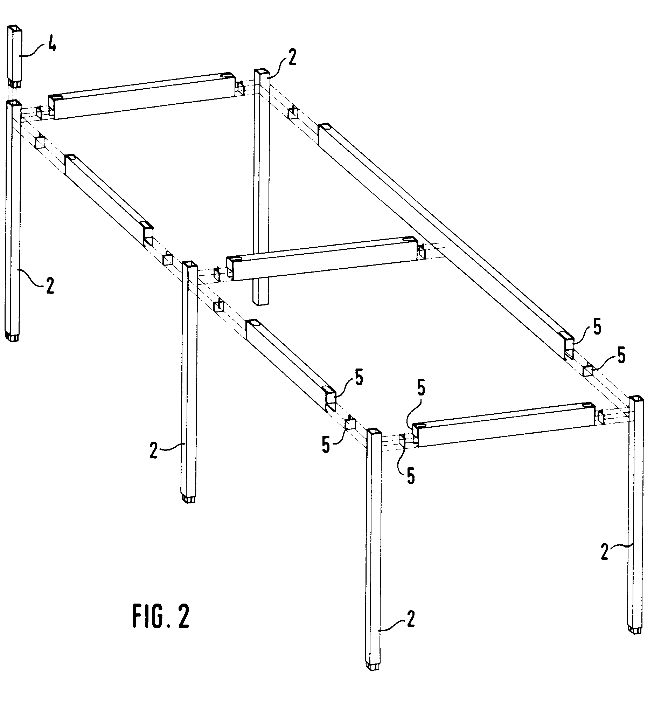

In Fig. 2 ist eine Raumzelle in größerem Maßstab zu erkennen. Sie besteht im wesentlichen aus Stützenelementen 2, die mit ihrem fußseitigen Ende starr in den Untergrund eingespannt sind. Dabei sind die Stützenelemente 2 entsprechend dem Raster des gewünschten Grundrisses angeordnet. Als besonders günstig haben sich die Rastermaße 2,75/2,75 m, 2,75/5,5 m, 2,75/1,375 m und 1,375/5,5 m erwiesen. Damit wird ein ausreichender Freiraum für Raumgestaltung und Raumordnung erreicht.

Auf das kopfseitige Ende des Stützenelements 2 können in Verlängerung deren Längsachse zur Errichtung weiterer Geschosse weitere Stützenelemente 4 gesteckt werden. Alternativ hierzu ist es auch möglich, Stützen zwei- oder mehrgeschossig mit Anschlußmöglichkeiten der Trägerelemente in Höhe der Geschoßdecken auszubilden.

Zwischen den kopfseitigen Enden der Stützenelemente 2 sind Trägerelemente 3 angeordnet, die über Verbindungsmittel 5 an die Stützenelemente 2 angeschlossen sind. Die Längen der Trägerelemente 3 korrespondieren zu den genannten Rastermaßen und weisen Längen von 5,5 m, 2,75 m und 1,375 m auf.

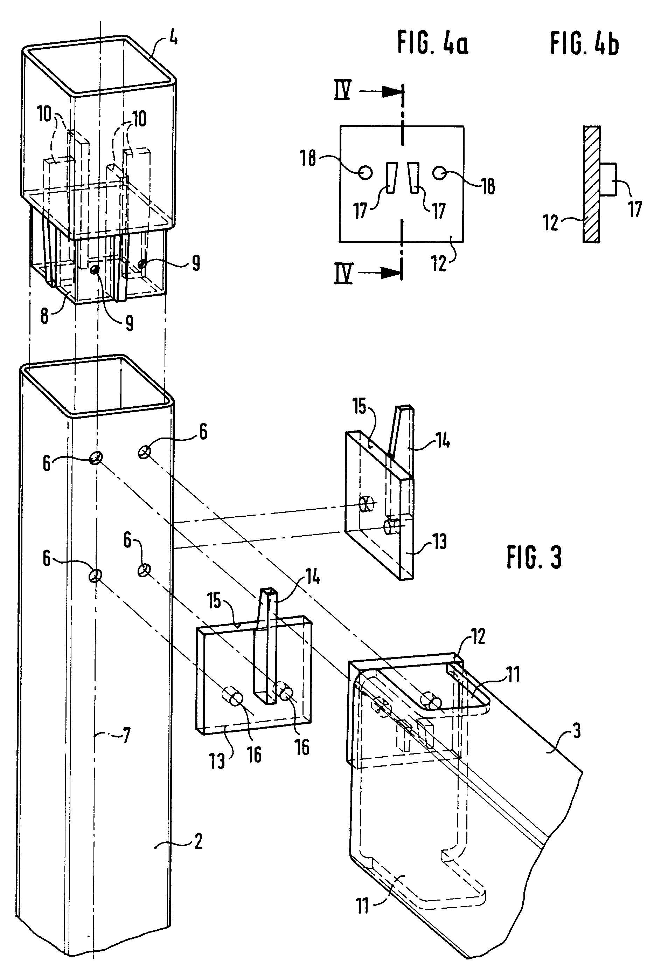

Fig. 3 zeigt einen Knotenpunkt im Detail, wobei die einzelnen Elemente und Teile explosionsartig auseinandergezogen sind. Man sieht zentral angeordnet das kopfseitige Ende eines Stützenelements 2. Das Stützenelement 2 besteht aus einem quadratischen Hohlprofil aus warm- oder kaltgewalztem Stahl. Die Seiten, an die ein Trägerelement 3 angeschlossen werden soll, weisen rechteckförmig angeordnete Bohrungen 6 auf.

In Verlängerung der Längsachse 7 ist ein weiteres auf das Stützenelement 2 aufsteckbares Stützenelement 4 angeordnet. Der Fuß 8 des Stützenelements 4 ist als quadratisches Einsatzteil ausgebildet, dessen Außenabmessungen kleiner sind als die Innenabmessungen des Querschnitts des Stützenelements 2 und das fest mit der Wand des Stützenelements 2 verbunden ist. Zu seinem freien Ende hin verläuft der Stützenfuß 8 konisch, was das Zusammenstecken der verschiedenen Stützenelemente 2, 4 erleichtert. Auch der Stützenfuß 8 weist Bohrungen 9 auf, die nach Zusammenstecken der Stützenelemente 2 und 4 mit dem oberen Bohrlochpaar 6 im kopfseitigen Ende des Stützenelements 2 fluchten. Im Querschnittsinneren des Stützenfußes 8 sind zur Verstärkung die Teile 10 mit der Stütze 4 und Stützenfuß 8 verschweißt.

Weiter ist in Fig. 3 das eine Ende eines Trägerelements 3 dargestellt, das an das Stützenelement 2 angeschlossen werden soll. Das Trägerelement 3 weist einen rechteckförmigen Hohlquerschnitt auf, wobei die Breite des Querschnitts den Abmessungen des Stützenelements 2, 4 entspricht. An den Enden weist das Trägerelement 3 sowohl an der Unter- als auch der Oberseite rechteckförmige Ausnehmungen 11 auf.

Mit der Stirnseite des Trägerelements 3 ist eine Kopfplatte 12 fest verbunden. Die Kopfplatte 12 erstreckt sich nur über den oberen Teilbereich der Stirnseite des Trägerelements 3. Der untere Teilbereich der Stirnseite bleibt offen. Die nähere Ausgestaltung der Kopfplatte 12 ist unter Fig. 4 beschrieben.

Ferner sieht man in Fig. 3 zwischen Stützenelement 2 und Trägerelement 3 eine Lagerplatte 13. Die Lagerplatte 13 besitzt einen quadratischen Grundriß. An ihrer Vorderseite ist ein Sicherungsstift 14 in aufrechter Position angeordnet. Während der Sicherungsstift 14 mit einem Teil seiner Länge fest mit der Lagerplatte 13 verbunden ist, ragt er mit dem anderen Teil seiner Länge über den oberen Rand 15 der Lagerplatte 13 hinaus. Dieser Teil des Sicherungsstifts 14 verläuft an der der Lagerplatte 13 zugewandten Seite zum freien Ende hin konisch. Im unteren Bereich der Lagerplatte 13 sind zu beiden Seiten des Sicherungsstifts 14 Bohrungen 16 vorgesehen. Diese Bohrungen 16 fluchten bei fertig montierter Konstruktion mit dem unteren Bohrlochpaar 6 des Stützenelements 2.

In den Fig. 4a und b ist eine Kopfplatte 12 in Ansicht und Querschnitt näher dargestellt. Die Kopfplatte 12 besitzt einen quadratischen Grundriß. An der dem Trägerelement 3 zugewandten Seite sind zwei trapezförmige Keile 17 derart angeordnet, daß von ihren sich zugewandten Flächen ein sich zum oberen Rand der Kopfplatte 12 hin konisch verlaufender Raum begrenzt wird. Jeweils zwischen den Keilen 17 und den Seitenrändern der Kopfplatte 12 ist eine Bohrung 18 angeordnet. Diese Bohrungen 18 fluchten mit dem oberen Bohrlochpaar 6 des Stützenelements 2.

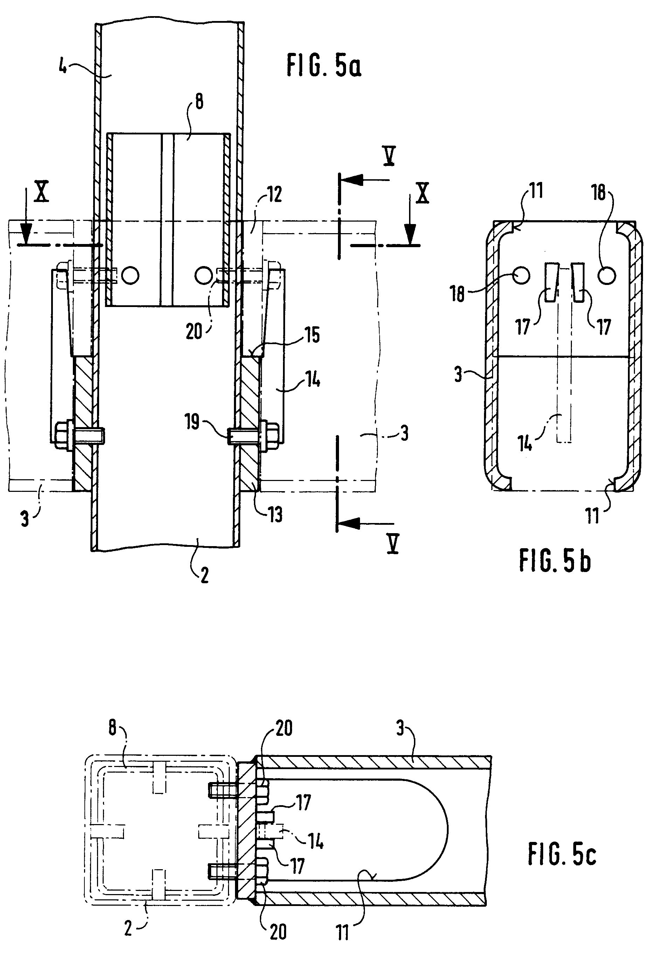

In Fig. 5 ist eine erfindungsgemäße Verbindungskonstruktion in fertig montiertem Zustand in verschiedenen Schnitten dargestellt. In Fig. 5a sieht man das kopfseitige Ende eines mit 2 gekennzeichneten vertikalen Stützenelements. Auf das Stützenelement 2 ist in Verlängerung der Längsachse 7 ein weiteres Stützenelement 4 gesteckt, wobei der Stützenfuß 8 in das Hohlprofil des Stützenelements 4 ragt.

An beiden Seiten des Stützenelements 2 schließt jeweils ein Trägerelement 3 an. Zwischen Stützenelement 2 und Trägerelement 3 sind die Lagerplatten 13 und Kopfplatte 12 angeordnet. Die Lagerplatte 13 ist mittels der Schraubenbolzen 19, die durch das untere Bohrlochpaar 6 reichen, an dem Stützenelement 2 derart befestigt, daß der Sicherungsstift 14 mit seinem freien Ende nach oben zeigt.

Die Kopfplatte 12, die fest mit dem stirnseitigen Ende eines Trägerelements 3 verbunden ist, liegt mit ihrem unteren Rand auf dem oberen Rand 15 der Lagerplatte 13 auf. Dabei greift die Kopfplatte 12 hinter den Sicherungsstift 14 der Lagerplatte 13. Entlang der konisch verlaufenden Führungsfläche des Sicherungsstiftes 14 wird das Trägerelement 3 während der Montage in Richtung des Trägerelements 3 ausgerichtet. Eine weitere Selbstzentrierung während des Montagevorgangs bewirken die Führungskeile 17 an der Innenseite der Kopfplatte 12 (Fig. 5b, 5c). Beim Ablegen der Trägerelemente 3 auf die Lagerplatte 13 gleitet der Sicherungsstift 14 an den geneigten Flächen der Führungskeile 17 entlang und gewährleistet dadurch, daß Lagerplatte 13 und Kopfplatte 12 bündig übereinander zu liegen kommen. Die dadurch erreichte Lage der Tragwerkselemente zueinander wird dann durch die Schraubenbolzen 20 fixiert, die von der Innenseite der Kopfplatte 12 her rechtwinklig zur Längsrichtung der Stützenelemente 2 eingeschraubt werden. Dabei können im Anschluß eines Trägerelements 3 dieselben Schraubenbolzen 20 dienen, die auch zur Stoßverbindung zweier Stützenelemente 2, 4 dienen. Um die Zugänglichkeit der Schraubenbolzen zu gewährleisten, sind sowohl an der Ober- als auch Unterseite der Trägerelemente 3 Ausnehmungen 11 angeordnet (Fig. 5c).

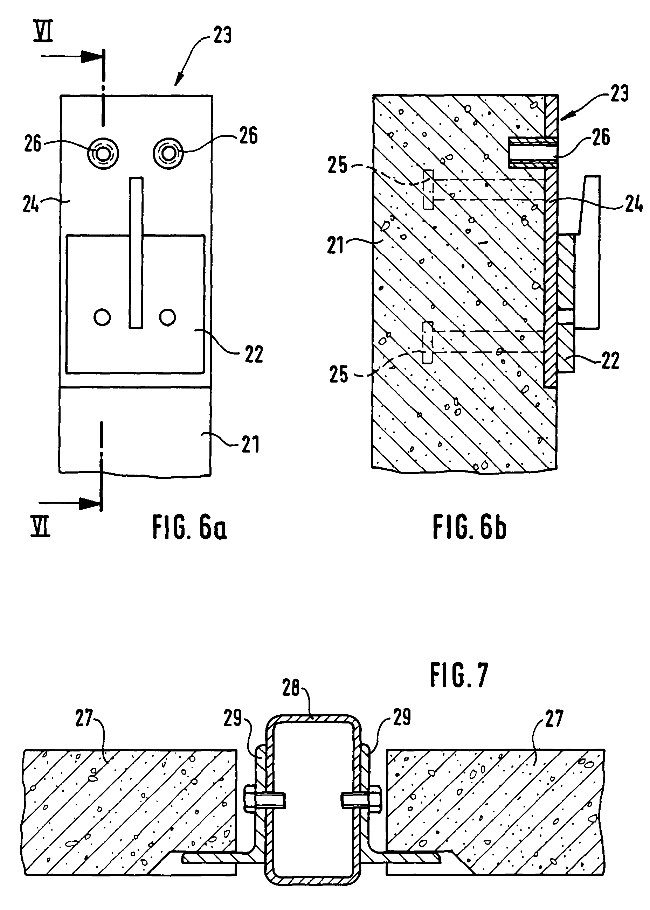

In Fig. 6 ist das kopfseitige Ende eines Stützenelements 21 aus Stahlbeton dargestellt. Zur Befestigung einer Lagerplatte 22 an dem Stützenelemente 21 ist im Bereich des Anschlusses beim Betonieren des Stützenelements 21 ein Einbauteil 23 einbetoniert.

Das Einbauteil 23 besteht im wesentlichen aus einer Grundplatte 24, deren Vorderseite bündig mit der Oberfläche des Stützenelements 21 abschließt. An der Rückseite der Grundplatte 24 sind zur Verankerung im Beton zwei Dübel 25 angeschweißt. Außerdem sind mit der Grundplatte 24 und dem Stützenelement 21 zwei Gewindehülsen 26 fest verbunden, die zur Befestigung der Trägerelemente mittels Kopfplatte und Schraubenbolzen dienen. An der Vorderseite der Grundplatte 24 ist an entsprechender Position die Lagerplatte 22 angeschweißt oder angeschraubt.

Fig. 7 zeigt den Anschluß von Deckenplatten 27 an ein Trägerelement 28 im Querschnitt. An beiden vertikalen Seiten des Hohlprofils des Trägerelements 28 sind in Längsrichtung Winkelprofile 29 angeschraubt. Die Deckenplatten 27 liegen mit ihrem Randbereich, der zu diesem Zweck ausgenommen sein kann, auf dem horizontalen Schenkel des Winkels 29 auf.

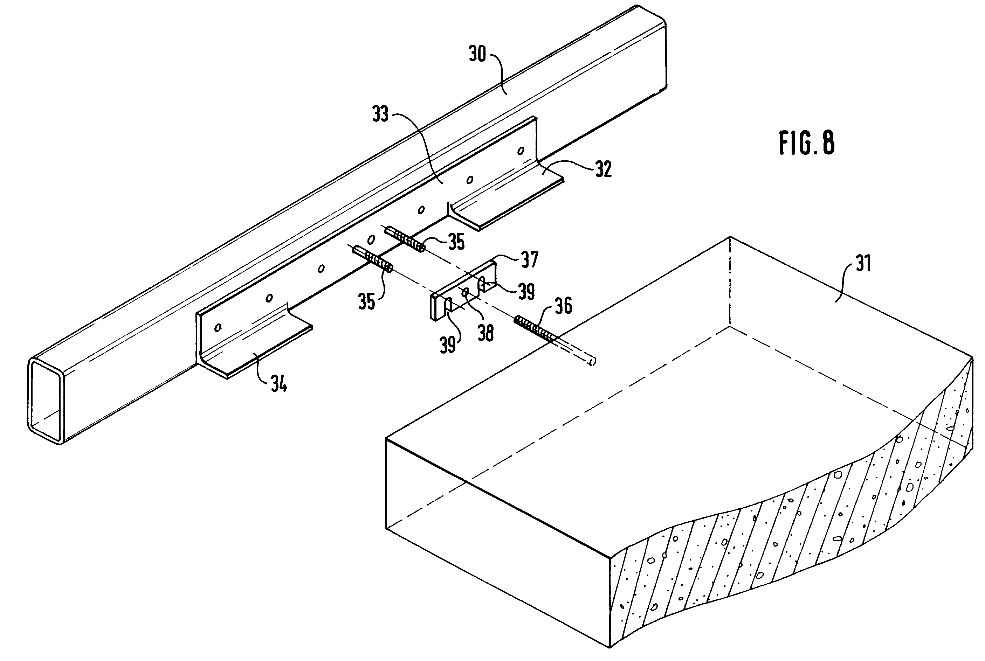

Fig. 8 zeigt schließlich eine Verbindungskonstruktion zwischen einem Trägerelement 30 und einer Deckenplatte 31 mit einer Justiervorrichtung zum Ausrichten der Deckenplatte 31 in Plattenebene rechtwinklig zur Längsachse des Trägerelements 30.

Zur Aufnahme einer Deckenplatte 31 ist an der Längsseite des Trägerelements 30 ein Winkel 32 angeordnet. Der aufrechte Schenkel 33 des Winkels 32 ist fest mit dem Trägerelement 30 verschraubt, der andere Schenkel 34 weist über eine bestimmte Länge im mittleren Bereich eine Unterbrechung auf. Mit dem aufrechten Schenkel 33 fest verbunden und rechtwinklig zu dessen Oberfläche angeordnet, verlaufen zwei Schraubenbolzen 35 in vorbestimmtem Abstand zueinander.

Aus der dem Trägerelement 30 gegenüberliegenden Stirnseite der Deckenplatte 31 ragt senkrecht zur Stirnseite und mittig angeordnet ein weiterer Schraubenbolzen 36. Dieser ist starr in der Deckenplatte 31 verankert. Ferner umfaßt die Justiervorrichtung ein zwischen dem Winkel 32 und der Deckenplatte 31 angeordnetes kammartiges Plattenteil 37. Es weist mittig ein Bohrloch 38 auf. In gleichen Abständen links und rechts des Bohrloches 38 und dem Abstand der Schraubenbolzen 35 entsprechend sind zwei Ausnehmungen 39 angeordnet.

Im Verlegezustand der Deckenplatte 31 ist das Plattenteil 37 über das Bohrloch 38 auf den Schraubenbolzen 36 aufgesteckt, wobei die Ausnehmungen 39 im Plattenteil 37 nach unten hin offen sind. Beim Verlegen wird die Deckenplatte 31 so auf den Winkel 32 abgelegt, daß die Schraubenbolzen 35 in den Ausnehmungen 39 zu liegen kommen. Die zug- und druckfeste Arretierung der Deckenplatte 31 in Plattenebene senkrecht zur Längsachse des Trägerelements 30 erfolgt über - nicht dargestellte - Mutternpaare auf den Schraubenbolzen 35 und 36. Dabei ist das Plattenteil 37 zwischen jedem Mutternpaar angeordnet und von diesen eingeklemmt. Die Fixierung der Deckenplatte 31 senkrecht zur Plattenebene erfolgt über die Schenkel 34 des Winkels 32.

Das beschriebene Ausführungsbeispiel bezieht sich auf eine Verbindungskonstruktion, bei der die Lagerplatte mit nach oben gerichtetem Sicherungsstift an dem Stützenelement angeordnet ist und beim Absetzen des Trägerelements die Kopfplatte den Sicherungsstift hintergreift. Die hierzu gemachten Ausführungen lassen sich natürlich sinngemäß auch auf erfindungsgemäße Ausführungsformen übertragen, bei denen eine Platte mit einem nach unten gerichteten Sicherungsstift an dem Trägerelement angeordnet ist und beim Absetzen der Sicherungsstift eine am Stützenelement befestigte Platte hintergreift, so wie in Patentanspruch 2 und folgende beansprucht.

## Patentansprüche

1. Kraftschlüssige Verbindungskonstruktion zwischen Stützen- und Trägerelementen bzw. Trägerelementen untereinander, wobei eine Lagerplatte fest mit einem Stützen- bzw. Trägerelement und eine Kopfplatte fest mit einem Trägerelement verbunden ist, dadurch gekennzeichnet, daß an der Vorderseite der Lagerplatte (13) mindestens ein Sicherungsstift (14) aufrecht angeordnet ist, dessen oberes Ende über die obere Kante der Lagerplatte (13) kragt und daß das Trägerelement (3) mit der unteren Randseite der Kopfplatte (12) auf der oberen Randseite der Lagerplatte (13) auflegbar ist.

2. Kraftschlüssige Verbindungskonstruktion zwischen Stützen- und Trägerelementen bzw. Trägerelementen untereinander, wobei eine Kopfplatte fest mit einem Stützen- bzw. Trägerelement und eine Lagerplatte fest mit einem Trägerelement verbunden ist, dadurch gekennzeichnet, daß an der Vorderseite der Lagerplatte mindestens ein Sicherungsstift aufrecht angeordnet ist, dessen unteres Ende über die untere Kante der Lagerplatte kragt und daß das Trägerelement mit der unteren Randseite der Lagerplatte auf der oberen Randseite der Kopfplatte auflegbar ist.

3. Verbindungskonstruktion nach Anspruch 1 oder 2, dadurch gekennzeichnet, daß sich der Sicherungsstift (14) zumindest über einen Teil seiner Länge und Seitenflächen zu seinem freien Ende hin verjüngt.

4. Verbindungskonstruktion nach einem der Ansprüche 1 bis 3, dadurch gekennzeichnet, daß die Kopfplatte (12) an ihrer der Lagerplatte (13) abgewandten Seite zumindest ein Führungselement (17) aufweist, das mit dem Sicherungsstift (14) korrespondiert.

5. Verbindungskonstruktion nach Anspruch 4, dadurch gekennzeichnet, daß das Führungselement zwei sich im Abstand gegenüberliegende Laschen (17) mit zueinander geneigt verlaufenden Seitenflächen aufweist.

6. Verbindungskonstruktion nach einem der Ansprüche 1 bis 5, dadurch gekennzeichnet, daß eine Lagerplatte (13) an einer oder mehreren Seiten in gleicher Höhe und/oder vorgegebenen Höhenabständen eines Stützenelements (2, 4) angeordnet ist.

7. Verbindungskonstruktion nach einem der Ansprüche 1 bis 6, dadurch gekennzeichnet, daß eine Lagerplatte (13) an zumindest einer Längsseite eines Trägerelements (3) angeordnet ist.

8. Verbindungskonstruktion nach einem der Ansprüche 1 bis 7, dadurch gekennzeichnet, daß eine Kopfplatte (12) an einer oder beiden Stirnseiten eines Trägerelements (3) angeordnet ist.

9. Verbindungskonstruktion nach einem der Ansprüche 1 bis 8, dadurch gekennzeichnet, daß eine Kopfplatte (12) an zumindest einer Längsseite eines Trägerelements (3) angeordnet ist.

10. Verbindungskonstruktion nach einem der Ansprüche 1 bis 9, dadurch gekennzeichnet, daß die Lagerplatten (13) und/oder Kopfplatten (12) mit den Stützenelementen (2, 4) und/oder Trägerelementen (3) verschraubt oder verschweißt sind.

11. Verbindungskonstruktion nach einem der Ansprüche 1 bis 10, dadurch gekennzeichnet, daß die Lagerplatten (13) und/oder Kopfplatten (12) seitlich bündig mit dem Stützenelement (2, 4) und/oder Trägerelement (3) abschließen.

12. Verbindungskonstruktion nach einem der Ansprüche 1 bis 11, dadurch gekennzeichnet, daß die Kopfplatte (12) nur einen Teil des Profilquerschnitts des Trägerelements (3) abdeckt.

13. Verbindungskonstruktion nach einem der Ansprüche 1 bis 12, dadurch gekennzeichnet, daß das Trägerelement (3) an zumindest einem Ende an der Unterseite und/oder Oberseite Ausnehmungen (11) aufweist.
